# EUROPÄISCHE PATENTSCHRIFT

(11) **EP 2 296 496 B1**
(45) Veröffentlichungstag und Bekanntmachung des Hinweises auf die Patenterteilung: **08.02.2012**
(21) Anmeldenummer: 09741794.3
(22) Anmeldetag: 03.04.2009
(51) Int. Cl.: A23L 2/56, A23F 5/00, A23L 1/236, A23L 1/29, A23L 2/00, A23L 2/60, A23F 3/32, A23F 3/34, A23L 2/395, A23F 3/00, A23L 2/52

(54) **GRANULATE FÜR DIE HERSTELLUNG VON KALORIENREDUZIERTEN INSTANT-GETRÄNKEN**
GRANULATES FOR THE PREPARATION OF REDUCED-CALORIE INSTANT DRINKS
GRANULÉS POUR LA PRODUCTION DE BOISSONS INSTANTANÉES À CALORIES RÉDUITES

(30) Priorität: 07.05.2008 DE 102008022704; 10.06.2008 DE 102008027684
(43) Veröffentlichungstag der Anmeldung: 23.03.2011
(60) Teilanmeldung: 11000842.2
(73) Patentinhaber: Krüger GmbH & Co. KG, 51469 Bergisch-Gladbach (DE)
(72) Erfinder: KRÜGER, Willibert, 51467 Bergisch Gladbach (DE)
(74) Vertreter: Gesthuysen, von Rohr & Eggert
(86) Internationale Anmeldenummer: PCT/EP2009/002454
(87) Internationale Veröffentlichungsnummer: WO 2009/135575

(56) Entgegenhaltungen:
- EP-A1- 0 524 484
- WO-A1-2004/008870
- WO-A1-2006/007993
- DE-A1-102004 052 800
- DE-U1-202006 017 797

## Beschreibung

Die vorliegende Erfindung betrifft eine Instant-Getränkezusammensetzung, insbesondere zur Herstellung eines vorzugsweise kalorienreduzierten Instant-Getränks durch Aufbereiten mit einer trinkbaren Flüssigkeit, sowie ein Verfahren zu ihrer Herstellung. Des weiteren betrifft die vorliegende Erfindung die Verwendung einer solchen Instant-Getränkezusammensetzung zur Herstellung eines vorzugsweise kalorienreduzierten Instant-Getränks, insbesondere Instant-Teegetränks, durch Aufbereiten mit einer Trinkflüssigkeit, insbesondere Wasser.

Der Begriff der Instant-Produkte ist eine Bezeichnung für meist pulverförmige, in Wasser lösliche bzw. dispergierbare Produkte überwiegend auf dem Gebiet der Nahrungs- und Heilmittel, wie Kaffee-, Tee-, Kakao-, Milchprodukte etc. Die Herstellung von Instant-Produkten erfolgt im allgemeinen durch Extraktion der Nahrungs- und Heilmittel bzw. deren Inhaltsstoffen, gefolgt von einer anschließenden Trocknung, insbesondere Gefrier- oder Sprühtrocknung. Für weitere Einzelheiten kann verwiesen werden auf Römpp Chemielexikon, Band 3, 10. Auflage, Georg-Thieme-Verlag, Stuttgart/New York, 1997, Seite 1936, Stichwort: "Instant-Produkte", sowie die dort referierte Literatur, deren jeweiliger Inhalt hiermit durch Bezugnahme eingeschlossen ist. Auf diese Weise werden insbesondere auch Instant-Teegetränke hergestellt.

Nachteilig bei den Instant-Getränkezusammensetzungen des Standes der Technik ist, daß sie oftmals über einen hohen Gehalt an Zucker(n), insbesondere Kristallzucker bzw. Saccharose, verfügen, um auf diese Weise dem aufbereiteten Instant-Getränk die gewünschte Süße zu verleihen. Ein hoher Kristallzuckergehalt ist aber aus ernähungsphysiologischen Gründen oftmals unerwünscht. Zudem wirkt ein hoher Kristallzuckergehalt kariogen, was ebenfalls nachteilig ist. Derartige Instant-Getränkezusammensetzungen des Standes der Technik sind darüber hinaus für Diabetiker weniger geeignet bzw. nicht vorteilhaft.

Eine Vielzahl der handelsüblichen Instant-Getränkemischungen weist zudem den Nachteil auf, daß sie oftmals als feinteiliges Pulver oder allenfalls als kleinkörniges Granulat bzw. Agglomerat vorliegen, wobei diese Produkte oft zu einer hohen Staubentwicklung neigen, was sowohl bei ihrer Herstellung als auch bei ihrer Verpackung und schließlich auch bei der Handhabung durch den Endverbraucher nachteilig ist. Zudem weisen derartige Instant-Produkte eine schlechte Dosierbarkeit auf. Weiterhin sind die pulverbasierten Instant-Produkte des Standes der Technik nicht immer in der Trinkflüssigkeit, insbesondere Wasser, optimal löslich, da sie bei Einbringen in die Flüssigkeit zum Verklumpen neigen. Zudem ist bei solchen Instant-Getränkezusammensetzungen des Standes der Technik insbesondere auch bei längerer Lagerung oftmals eine Tendenz zur Klumpenbildung zu beobachten.

Im Stand der Technik ist es bislang versucht worden, den ernährungsphysiologisch nicht optimalen Zucker in Form von Saccharose bzw. Kristallzucker durch sogenannte Süßstoffe zu ersetzen. Aufgrund der hohen Süßkraft der im Stand der Technik eingesetzten Süßstoffe kann es schnell zu einer Übersüßung des aus der Zusammensetzung hergestellten Trinkproduktes kommen. Die im Stand der Technik bekannten Instant-Getränkezusammensetzungen weisen somit eine schlechte Dosierbarkeit auf, was maßgeblich mit der hohen Süßkraft der verwendeten Süßstoffe zusammenhängt. Zudem ist es im Stand der Technik bislang nicht gelungen, eine kalorienreduzierte Instant-Getränkezusammensetzung insbesondere auf Basis eines Granulats bereitzustellen, welche auch bei längeren Lagerzeiten nicht verklumpt und welche zudem gut in der Trinkflüssigkeit löslich ist und welche die gute Dosierbarkeit einer nichtkalorienreduzierten Instant-Getränkezusammensetzung aufweist.

Die DE 10 2004 052 890 A1 betrifft Trockenaromaformulierungen, welche einen geträgerten Extrakt, insbesondere einen auf Trehalose und/oder Isomaltulose als Träger geträgerten Extrakt, enthalten sowie ein Verfahren zur Herstellung der Trockenaromaformulierungen und ihre Verwendung.

Die WO 2006/007993 A1 betrifft granulat- oder pulverförmige kakaohaltige Mischungen, insbesondere zur Verwendung als Instant-Kakaogetränkepulver, welche mindestens eine Kakaokomponente, mindestens einen weiteren Zusatzstoff und mindestens 39 bis 90 Gew.-% Palatinose enthalten, sowie die Verwendung von Palatinose in pulverförmigen Kakaomischungen.

Die WO 2004/008870 A1 betrifft ein Instant-Getränkepulver, insbesondere Instant-Teepulver, welches mindestens 90 Gew.-%, bezogen auf die Gesamtmenge, Isomaltulose als Trägerstoff enthält, wobei auf einen vollständigen Ersatz von Zuckern, welche von der Mundflora fermentiert werden können, durch Isomaltulose abgestellt wird.

Die DE 20 2006 017 797 U1 betrifft ein Brausepräparat zur Zubereitung von Getränken oder zur direkten Einnahme. Das Präparat enthält die für die Brausewirkung erforderlichen Komponenten, vorzugsweise Citronensäure und Natriumhydrogencarbonat, sowie mindestens ein aus Pflanzen oder Tieren gewinnbares Amin, mindestens ein aus Pflanzen gewinnbares Alkaloid und mindestens ein im Zellstoffwechsel physiologisch wirksames Antioxidans. Das Präparat enthält weiterhin Kohlenhydrate bzw. Zucker, bei welchen es sich auch um Saccharose handeln kann.

Die EP 0 524 484 A1 betrifft ein Instant-Getränkepulver, -granulat oder -konzentrat aus teeähnlichen Erzeugnissen oder Tee sowie ein Verfahren zu dessen Herstellung. Das Pulver oder Granulat enthält ein Konzentrat aus teeähnlichen Erzeugnissen oder Tee auf einem wasserlöslichen oder in Wasser dispergierbaren pulver-, granulatförmigen oder pastösen Träger, wobei der Träger das Fructosesacccharid Inulin ist.

Die Aufgabe der vorliegenden Erfindung besteht somit darin, eine Instant-Getränkezusammensetzung bereitzustellen, welche sich zur Herstellung eines vorzugsweise kalorienreduzierten Instant-Getränks durch Aufbereiten mit einer Trinkflüssigkeit eignet und die zuvor geschilderten Nachteile des Standes der Technik zumindest im wesentlichen vermeidet oder aber zumindest verringert bzw. abschwächt.

Insbesondere besteht die Aufgabe der vorliegenden Erfindung darin, eine Instant-Getränkezusammensetzung bereitzustellen, welche gegenüber dem Stand der Technik ernährungsphysiologisch verbessert und zudem in geringerem Maße kariogen ist, wobei gleichzeitig die Dosierbarkeit und das Verklumpungsverhalten sowohl beim Einbringen in eine Trinkflüssigkeit als auch bei der Lagerung verbessert sein soll.

Zur Lösung der zuvor geschilderten Aufgabe schlägt die vorliegende Erfindung eine Zusammensetzung (d. h. Instant-Getränkezusammensetzung) nach Anspruch 1 vor; weitere vorteilhafte Ausgestaltungen sind Gegenstand der diesbezüglichen abhängigen Ansprüche.

Weiterer Gegenstand der vorliegenden Erfindung ist ein Verfahren zur Herstellung der erfindungsgemäßen Instant-Getränkezusammensetzung nach Anspruch 13.

Weiterer Gegenstand der vorliegenden Erfindung ist die nach dem erfindungsgemäßen Verfahren erhältliche Instant-Getränkezusammensetzung nach Anspruch 14.

Schließlich ist ein wiederum weiterer Gegenstand der vorliegenden Erfindung die erfindungsgemäße Verwendung der Zusammensetzung nach der vorliegenden Erfindung, wie sie in Anspruch 15 definiert ist.

Es versteht sich von selbst, daß besondere Ausgestaltungen und Ausführungsformen, welche nur im Zusammenhang mit einem Erfindungsaspekt beschrieben sind, auch in bezug auf die anderen Erfindungsaspekte entsprechend gelten, ohne daß dies ausdrücklich beschrieben ist.

Bei allen nachstehend genannten relativen bzw. prozentualen gewichtsbezogenen Mengenangaben ist zu beachten, daß diese im Rahmen der erfindungsgemäßen Zusammensetzung vom Fachmann derart auszuwählen sind, daß sie sich in der Summe unter Einbeziehung gegebenenfalls weiterer Komponenten bzw. Inhaltsstoffe bzw. Zusatzstoffe bzw. Bestandteile, insbesondere wie nachfolgend definiert, stets um 100 Gew.-% ergänzen. Dies versteht sich für den Fachmann aber von selbst. Im übrigen gilt, daß der Fachmann anwendungsbezogen oder einzelfallbedingt von den nachfolgend aufgeführten Mengenangaben abweichen kann, ohne daß er den Rahmen der vorliegenden Erfindung verläßt.

Gegenstand der vorliegenden Erfindung ist somit - gemäß einem **ersten** Aspekt der vorliegenden Erfindung - eine Instant-Getränkezusammensetzung, insbesondere zur Herstellung eines vorzugsweise kalorienreduzierten Instant-Getränks durch Aufbereiten mit einer trinkbaren Flüssigkeit, in Form eines Granulats, wobei die Zusammensetzung aufweist:
(a) mindestens einen Granulatbildner in einer Menge von 10 bis 98 Gew.-%, bezogen auf die Zusammensetzung, und
(b) mindestens einen Geschmacksbildner in einer Menge von 0,1 bis 75 Gew.-%, bezogen auf die Zusammensetzung, sowie
(c) mindestens einen weiteren Inhaltsstoff, ausgewählt aus Säuerungsmitteln, Vitaminen und Farbstoffen;

- wobei die Zusammensetzung einen gegenüber handelsüblichen nichtkalorienreduzierten Produkten reduzierten Saccharosegehalt aufweist, wobei die Menge an Saccharose 25 bis 80 Gew.-%, bezogen auf die Zusammensetzung, beträgt,
- wobei die Zusammensetzung Granulate mit einer Schüttdichte von 200 bis 600 g/l aufweist, und
- wobei die Zusammensetzung, bezogen auf die Zusammensetzung, eine Gesamtrestfeuchte von 0,5 bis 5 Gew.-% aufweist.

Denn die Anmelderin hat in überraschender Weise gefunden, daß durch die gezielte Kombination mindestens eines Granulatbildners, insbesondere wie nachfolgend definiert, mit mindestens einem Geschmacksbildner, insbesondere wie nachfolgend definiert, eine Instant-Getränkezusammensetzung nach der Erfindung bereitgestellt wird, welche gegenüber dem Stand der Technik signifikant verbesserte Eigenschaften aufweist. In diesem Zusammenhang verfügt die erfindungsgemäße Instant-Getränkezusammensetzung aufgrund ihrer Kalorienreduktion über verbesserte ernährungsphysiologische Eigenschaften bei gleichzeitig verminderter Kariogenität. Zudem weist die erfindungsgemäße Instant-Getränkezusammensetzung eine gute Lagerstabilität (kein Verklumpen) und ein verbessertes Löslichkeitsverhalten bei gleichzeitig verbesserter Dosierbarkeit auf.

Erfindungsgemäß werden unter dem Begriff "Granulat" Anhäufungen von Granulatkörnchen verstanden, wobei es sich bei den jeweiligen Granulatkörnem beispielsweise um asymmetrische Aggregate aus Pulverpartikeln handeln kann. Das Granulat bzw. die Granulatkörnchen weisen im allgemeinen keine harmonische geometrische Form auf; die Form einer Kugel, eines Stäbchens, eines Zylinders usw. ist im allgemeinen nur ungefähr und andeutungsweise erhalten. Die Oberfläche der einzelnen Granulatkörnchen kann im allgemeinen uneben sein. Zudem können die Granulatkörner in vielen Fällen mehr oder weniger porös sein. Zu weiteren Einzelheiten zu dem Begriff der Granulate kann insbesondere verwiesen werden auf Römpp Chemielexikon, 10. Auflage, Georg-Thieme-Verlag, Stuttgart/New York, Band 2, 1997, Seite 1600, Stichwort: "Granulate", sowie die dort referierte Literatur, deren jeweiliger Inhalt durch Bezugnahme eingeschlossen ist.

Im Rahmen der vorliegenden Erfindung hat es sich als besonders vorteilhaft erwiesen, wenn die Menge an Granulatbildner 10 bis 98 Gew.-%, vorzugsweise 20 bis 97 Gew.-%, bevorzugt 30 bis 96 Gew.-%, besonders bevorzugt 50 bis 95 Gew.-%, bezogen auf die Zusammensetzung und/oder das Granulat, beträgt.

Im Rahmen der vorliegenden Erfindung werden zudem besonders gute Ergebnisse hinsichtlich der vorgenannten Eigenschaften, wie Dosierbarkeit, Löslichkeitsverhalten etc., erhalten, wenn der Granulatbildner ausgewählt ist aus der Gruppe von Zuckeralkoholen, Süßstoffen, Stärkederivaten, Zuckern und deren Mischungen. Die vorgenannten Substanzen bilden gewissermaßen - ohne sich auf diese Theorie beschränken zu wollen - das Grundgerüst bzw. die Matrix der in Granulatform vorliegenden erfindungsgemäßen Instant-Getränkezusammensetzung, in welche die Geschmacksbildner sozusagen eingelagert bzw. integriert sein können. Aufgrund der Verwendung der vorgenannten Substanzen auf Basis von Zuckeralkoholen, Süßstoffen und Stärkederivaten wird zudem eine signifikante Kalorienreduktion erreicht. Die Verwendung der vorgenannten Substanzen führt auch zu einer Ausbildung von insbesondere hinsichtlich ihrer Löslichkeit und Verklumpungseigenschaften verbesserten Granulaten.

Was die im Rahmen der erfindungsgemäßen Instant-Getränkezusammensetzung verwendbaren Zuckeralkohole anbelangt, so können diese aus der Gruppe von Erythrit (Erythritol), Mannit (Mannitol), Xylit (Xylitol), Sorbit (Sorbitol), Isomaltit bzw. Isomalt, Maltit (Maltitol), Lactit (Lactitol) und Galactit (Galactitol) ausgewählt sein.

Die zuvor angeführten Zuckeralkohole werden auch zu den sogenannten Zukkeraustauschstoffen gezählt. Hierunter versteht man eine Sammelbezeichnung für Stoffe, welche anstelle von Saccharose zur Süßung von Lebensmitteln verwendet werden. Im Gegensatz zu den mitunter intensiv schmeckenden Süßstoffen, von denen der Begriff der Zuckeraustauschstoffe im allgemeinen abgegrenzt wird, werden Zuckeraustauschstoffe technologisch wie Saccharose eingesetzt, d. h. sie besitzen einen "Körper" und einen physiologischen Brennwert (nutritive Zuckeraustauschstoffe). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung (Diabetiker) und in der zum Teil verminderten kariogenen Wirkung. Für einige Zuckeraustauschstoffe, wie z. B. Xylit, ist sogar eine antikariogene Wirkung beschrieben. Die Zuckeraustauschstoffe und die davon verschiedenen Süßstoffe werden gemeinsam als Süßungsmittel bezeichnet. Für weitergehende Einzelheiten zu dem Begriff der Zuckeraustauschstoffe kann beispielsweise verwiesen werden auf Römpp Lexikon Chemie, Band 6, 10. Auflage, Georg-Thieme-Verlag, Stuttgart/New York, 1999, Seite 5098 bis 5100, Stichwort: "Zuckeraustauschstoffe", und auf Römpp Lexikon Lebensmittelchemie, 9. Auflage, Georg-Thieme-Verlag, Stuttgart/New York, Seite 955, Stichwort: "Zuckeraustauschstoffe" sowie auf die dort jeweils referierte Literatur, deren jeweiliger Inhalt hiermit durch Bezugnahme eingeschlossen ist.

Der Begriff der zu den Zuckeraustauschstoffen zählenden Zuckeralkohole (Polyole), wie er erfindungsgemäß verwendet wird, ist eine Gruppenbezeichnung für im allgemeinen kristalline, gut wasserlösliche Polyhydroxyverbindungen, die durch Reduktion der Carbonylfunktion aus Zuckern entstehen. Hierbei werden insbesondere Monosaccharid-Zuckeralkohole und Disaccharid-Zuckeralkohole unterschieden. Für weitergehende Einzelheiten zu dem Begriff der Zuckeralkohole kann insbesondere verwiesen werden auf Römpp Lexikon Chemie, 10. Auflage, Georg-Thieme-Verlag, Stuttgart/New York, Band 6, 1999, Seite 5097, Stichwort: "Zuckeralkohole", und auf Römpp Lexikon Lebensmittelchemie, 9. Auflage, Georg-Thieme-Verlag, Stuttgart/New York, 1995, Seiten 1953/954, Stichwort: "Zuckeralkohole" sowie auf die dort jeweils referierte Literatur, deren jeweiliger Inhalt durch Bezugnahme eingeschlossen ist.

Was die erfindungsgemäß verwendbaren Süßstoffe anbelangt, so können diese ausgewählt sein aus der Gruppe von Acesulfam, Cyclamat, Glycyrrhizin, Aspartam, Dulcin, Saccharin (beispielsweise auch Natriumsaccharin und/oder Calciumsaccharin), Rebaudiosid (z. B. Rebaudiosid A), Steviosid, Naringin-Dihydrochalkon, Monellin, Neohesperidin-Dihydrochalkon (NHDC), Sucralose, Thaumatin, Neotam und deren Mischungen, insbesondere Aspartam und/oder Acesulfam.

Was die Menge an Süßstoff in der erfindungsgemäßen Zusammensetzung anbelangt, so sollte diese im Bereich von 0,01 bis 5 Gew.-%, insbesondere 0,1 bis 4 Gew.-%, vorzugsweise 0,2 bis 3 Gew.-%, bezogen auf die Zusammensetzung und/oder das Granulat, liegen.

In diesem Zusammenhang sollte die Menge an Süßstoff in der erfindungsgemäßen Zusammensetzung höchstens 5 Gew.-%, insbesondere höchstens 3 Gew.-%, vorzugsweise höchstens 2 Gew.-%, besonders bevorzugt höchstens 1 Gew.-%, bezogen auf die Zusammensetzung und/oder das Granulat, betragen.

Im Unterschied zu Zuckeraustauschstoffen versteht man unter Süßstoffen Verbindungen synthetischer oder natürlicher Herkunft, die keinen oder im Verhältnis zur Süßkraft einen vernachlässigbaren physiologischen Brennwert besitzen, weswegen sie im Englischen aus als "*non-nutritive sweeteners*" bezeichnet werden, und eine um ein Vielfaches höhere Süßkraft als Saccharose aufweisen (die Süßkraft einer Verbindung ist durch die Verdünnung gegeben, bei der sie ebenso süß wie eine Saccharoselösung schmeckt (isosüße Lösung). Für weitere Einzelheiten zu dem Begriff der Süßstoffe kann insbesondere verwiesen werden auf Römpp Chemielexikon, 10. Auflage, Georg-Thieme-Verlag, Stuttgart/New York, Band 5, 1998, Seiten 4302 bis 4304, Stichwort: "Süßstoffe", sowie die dort referierte Literatur, deren jeweiliger Inhalt hiermit durch Bezugnahme eingeschlossen ist.

Was die erfindungsgemäß verwendbaren Stärkederivate anbelangt, so können diese ausgewählt sein aus Stärkeabbauprodukten, insbesondere Dextrinen und Maltodextrinen, vorzugsweise Maltodextrinen. Für weitere Einzelheiten zu Dextrinen und Maltodextrinen kann insbesondere verwiesen werden auf Römpp Chemielexikon, 10. Auflage, Georg-Thieme-Verlag, Stuttgart/New York, Band 2, 1997, Seite 928, Stichwort: "Dextrine", und Band 4, 1998, Seite 2513, Stichwort: "Maltodextrine", und auf Römpp Lexikon Lebensmittelchemie, Georg-Thieme-Verlag, Stuttgart/New York, 9. Auflage, 1995, Seite 213, Stichwort: "Dextrine", und Seite 518, Stichwort: "Maltodextrine", sowie auf die dort jeweils referierte Literatur, deren jeweiliger Inhalt durch Bezugnahme eingeschlossen ist.

Wenn die erfindungsgemäße Instant-Getränkezusammensetzung bzw. das Granulat beispielsweise Zucker enthält, so kann dieser insbesondere ausgewählt sein aus der Gruppe von Saccharose (Kristallzucker), Mannose, Maltose, Dextrose, Lactose, Glucose, Xylose, Isomaltulose und deren Mischungen.

Insbesondere hat die Verwendung von Isomaltulose (Palatinose) - einem Disaccharid, das üblicherweise aus Rübenzucker gewonnen wird und auch als natürlicher Bestandteil von Honig oder Zuckerrohr bekannt ist und dessen natürliche Süße der des Zuckers sehr nahekommt - den Vorteil, daß Isomaltulose nicht kariogen ist, d. h. von Karies erzeugenden Bakterien der Mundflora nicht zur Säurebildung verwendet werden kann. Genau wie Zucker wird aber Isomaltulose voll verstoffwechselt und weist deshalb denselben kalorischen Wert von 4 kcal/g auf; doch im Gegensatz zu Zucker findet dieser Prozeß wesentlich langsamer statt, so daß die glykämische Wirkung sehr niedrig ist und die Glukose dem Körper über einen längeren Zeitraum zur Verfügung gestellt wird. Für den Menschen bedeutet das: Wenn die Glukose nur langsam ins Blut übergeht, bleibt der Blutzuckerspiegel stabiler, und dem Körper steht die Energie aus dem Kohlenhydrat über einen längeren Zeitraum zur Verfügung. Die Frage nach der optimalen Verfügbarkeit von Energie ist sowohl in Wissenschaft als auch Produktentwicklung von wachsendem Interesse, da dies eine beeinflussende Rolle nicht nur auf die körperliche, sondern auch auf die geistige Leistungsfähigkeit haben könnte.

Die erfindungsgemäße Zusammensetzung bzw. das Granulat zeichnet sich insbesondere dadurch aus, daß es einen gegenüber handelsüblichen nichtkalorienreduzierten Produkten, insbesondere handelsüblichen nichtkalorienreduzierten Instant-Getränkezusammensetzungen, reduzierten Zuckergehalt, insbesondere Saccharosegehalt, vorzugsweise einen reduzierten Kristallzuckergehalt, aufweist. Dies wird im Rahmen der vorliegenden Erfindung durch den gezielten Einsatz von Zuckeralkoholen, Süßstoffen bzw. Stärkederivaten erreicht. Auf diese Weise wird eine signifikante Kalorienreduktion ermöglicht, wobei gleichzeitig gewährleistet ist, daß die Granulate der erfindungsgemäßen Zusammensetzung insofern optimiert sind, als eine hervorragende Löslichkeit in der Trinkflüssigkeit und eine gute Dosierung gegeben ist - insbesondere da die erfindungsgemäße Instant-Getränkezusammensetzung eine zu herkömmlichen Zusammensetzungen vergleichbare Süße aufweist. Gleichzeitig ist das Verklumpungsverhalten sowohl bei Lagerung als auch bei Einbringen in die Trinkflüssigkeit deutlich verbessert.

Durch den gezielten Einsatz von Zuckeralkoholen, Süßstoffen bzw. Stärkederivaten wird gleichermaßen die Süßkraft der erfindungsgemäßen Zusammensetzung erhöht, so daß diese bei der Anwendung (d. h. Herstellung des trinkfertigen Getränkes) im Vergleich zu Produkten des Standes der Technik in geringeren Mengen eingesetzt zu werden braucht und folglich die Zufuhr an Zucker bei ansonsten gleicher Geschmacksintensität bzw. Süße des trinkfertigen Getränkes signifikant reduziert wird.

In diesem Zusammenhang ist es erfindungsgemäß vorgesehen, daß die Menge an Zucker(n), insbesondere Saccharose, 25 bis 80 Gew.-%, insbesondere 30 bis 75 Gew.-%, vorzugsweise 35 bis 70 Gew.-%, bezogen auf die Zusammensetzung und/oder das Granulat, beträgt.

Die erfindungsgemäße Zusammensetzung weist einen verminderten Zuckergehalt, insbesondere Saccharosegehalt, vorzugsweise Kristallzuckergehalt, auf. Diesbezüglich sollte die Menge an Zucker(n), insbesondere Saccharose, höchstens 80 Gew.-%, insbesondere höchstens 75 Gew.-%, vorzugsweise höchstens 70 Gew.-%, bezogen auf die Zusammensetzung und/oder das Granulat, betragen.

Was den Geschmacksbildner bzw. die geschmacksgebenden Komponenten bzw. die Geschmacksstoffe anbelangt, so sollte die Menge an Geschmacksbildner in der erfindungsgemäßen Zusammensetzung 0,1 bis 75 Gew.-%, insbesondere 0,5 bis 60 Gew.-%, vorzugsweise 1 bis 50 Gew.-%, bevorzugt 2 bis 25 Gew.-%, bezogen auf die Zusammensetzung und/oder das Granulat, betragen.

In diesem Zusammenhang kann es erfindungsgemäß vorgesehen sein, daß der Geschacksbildner ausgewählt ist aus Extrakten, insbesondere Pflanzenextrakten, Fruchtextrakten, Tee-Extrakten oder deren Mischungen. In diesem Zusammenhang sollte die Menge an Extrakten, insbesondere wie zuvor definiert, 0,1 bis 10 Gew.-%, bevorzugt 0,25 bis 8 Gew.-%, besonders bevorzugt 0,5 bis 6 Gew.-%, ganz besonders bevorzugt 1 bis 5 Gew.-%, bezogen auf die Zusammensetzung und/oder das Granulat, betragen.

Gleichermaßen kann es erfindungsgemäß vorgesehen sein, daß der Geschmacksbildner ausgewählt ist aus Aromen und/oder Aromastoffen. Diesbezüglich kann die Menge an Aromen bzw. Aromastoffen 0,01 bis 10 Gew.-%, bevorzugt 0,1 bis 8 Gew.-%, besonders bevorzugt 0,3 bis 5 Gew.-%, ganz besonders bevorzugt 0,5 bis 3 Gew.-%, bezogen auf die Zusammensetzung und/oder das Granulat, betragen.

Im Rahmen der vorliegenden Erfindung ist es gleichermaßen möglich, daß der Geschmacksbildner ausgewählt ist aus Pflanzenpulvern, Fruchtpulvern und/oder Saftpulvern. In diesem Zusammenhang kann die Menge an Pflanzenpulver, Fruchtpulver bzw. Saftpulver, bezogen auf die Zusammensetzung bzw. das Granulat, 0,01 bis 8 Gew.-%, bevorzugt 0,05 bis 6 Gew.-%, besonders bevorzugt 0,1 bis 4 Gew.-%, ganz besonders bevorzugt 0,15 bis 3 Gew.-%, betragen.

In bezug auf die erfindungsgemäße Zusammensetzung können die zuvor genannten Geschmacksbildner auch kombiniert werden, so daß insgesamt eine individuelle Geschmacksgebung vorgenommen werden kann.

Wenn die erfindungsgemäße Instant-Getränkezusammensetzung bzw. das Granulat Säuerungsmittel enthält, können diese insbesondere aus der Gruppe von Genußsäuren, vorzugsweise Citronensäure, Weinsäure und Äpfelsäure, ausgewählt sein. Im allgemeinen werden solche Säuerungsmittel in Mengen von 0,1 bis 10 Gew.-%, bevorzugt 1 bis 10 Gew.-%, ganz besonders bevorzugt 2 bis 8 Gew.-%, bezogen auf die Zusammensetzung bzw. auf Granulat, eingesetzt.

Darüber hinaus kann die erfindungsgemäße Instant-Getränkezusammensetzung bzw. das Granulat auch Vitamine, insbesondere Ascorbinsäure (Vitamin C), enthalten. Die Vitamine werden insbesondere in Mengen von 0,01 bis 5 Gew.-%, bevorzugt 0,1 bis 4 Gew.-%, ganz besonders bevorzugt 0,5 bis 2 Gew.-%, bezogen auf die Zusammensetzung bzw. das Granulat, eingesetzt.

Weiterhin kann die erfindungsgemäße Instant-Getränkezusammensetzung bzw. das Granulat Farbstoffe, insbesondere natürliche und/oder naturidentische Farbstoffe, enthalten. Diesbezüglich können die Farbstoffe beispielsweise in Mengen von 0,01 bis 5 Gew.-%, bevorzugt 0,1 bis 4 Gew.-%, ganz besonders bevorzugt 0,5 bis 3 Gew.-%, bezogen auf die Zusammensetzung bzw. das Granulat, eingesetzt werden.

Was die erfindungsgemäße Instant-Getränkezusammensetzung weiterhin anbelangt, so kann diese im Rahmen der vorliegenden Erfindung beispielsweise in Form eines kornförmigen Granulats vorliegen. In diesem Zusammenhang sollte das Granulat eine Partikelgröße von 0,1 bis 6 mm, insbesondere 0,5 bis 5 mm, vorzugsweise 0,5 bis 3 mm, aufweisen.

Gleichermaßen ist es im Rahmen der vorliegenden Erfindung jedoch auch möglich, daß die erfindungsgemäße Zusammensetzung in Form eines zumindest im wesentlichen stäbchenförmigen Granulats ("Würstchengranulat") vorliegt. Diesbezüglich sollte das Granulat einen Partikeldurchmesser bzw. Stäbchendurchmesser von 0, 1 bis 6 mm, insbesondere 0,2 bis 5 mm, vorzugsweise 0,5 bis 3,5 mm, aufweisen bzw. eine Partikellänge bzw. Stäbchenlänge von 0,2 bis 10 mm, insbesondere 0,4 bis 6 mm, vorzugsweise 0,5 bis 4 mm, aufweisen.

Aufgrund der spezifischen Auswahl der Form und der Größe bzw. Länge der Granulatteilchen wird insbesondere gewährleistet, daß die erfindungsgemäße Zusammensetzung ein gutes Löslichkeitsverhalten aufweist und nicht klumpt. Die Teilchengröße kann durch an sich bekannte Methoden, z. B. durch Siebanalyse, granulometrisch, durch Lichtbeugung etc., bestimmt werden. Was die vorgenannten Teilchengrößen, -durchmesser bzw. -längen anbelangt, so sind diese Angaben derart zu verstehen, daß mindestens 90 %, insbesondere mindestens 95 %, vorzugsweise mindestens 99 % oder mehr des Granulats Teilchengrößen in den vorgenannten Bereichen aufweisen.

Die erfindungsgemäße Instant-Getränkezusammensetzung zeichnet sich zudem durch eine spezielle Schüttdichte aus. So kann die Zusammensetzung ein Granulat mit einer Schüttdichte von 200 bis 600 g/l, insbesondere 325 bis 550 g/l, vorzugsweise 350 bis 480 g/l, aufweisen.

Durch die spezifische Schüttdichte der erfindungsgemäßen Instant-Getränkezusammensetzung liegt ein gewichtsbezogen hoher Volumenanteil vor. Dies führt unter anderem dazu, daß die Dosierfähigkeit der erfindungsgemäßen Instant-Getränkezusammensetzung bei der Zubereitung des betreffenden Instant-Getränks mit einer Trinkflüssigkeit weiter verbessert wird. Zudem wird der massenbezogene Anteil an für die Aufbereitung des Instant-Getränks benötigter Instant-Getränkezusammensetzung reduziert.

Unter dem Begriff der Schüttdichte ist im allgemeinen der Quotient aus der Masse und dem eingenommenen Volumen, das Zwischenräume und, falls zusätzlich vorhanden, auch Hohlräume (z. B. Poren) einschließt, zu verstehen. Zur Bestimmung der Schüttdichte von Pulver bzw. Granulat kann auf die DIN ISO 607:1984-01 verwiesen werden. Man bestimmt die Schüttdichte, beispielsweise indem man die betreffende Zusammensetzung in einen Meßkasten, Meßbecher, Meßzylinder oder dergleichen schüttet und das Gewicht feststellt. Höher als die Schüttdichte, deren Reziprokes das Schüttvolumen ist, liegt die sogenannte Rütteldichte und erst recht die sogenannte Stampfdichte. Für weitere Einzelheiten zum Begriff der Schüttdichte kann insbesondere verwiesen werden auf Römpp Chemielexikon, 10. Auflage, Georg-Thieme-Verlag, Stuttgart/New York, Band 5, 1998, Seite 3990, Stichwort: "Schüttdichte".

Das in der erfindungsgemäßen Instant-Getränkezusammensetzung eingesetzte Granulat besitzt einen gewissen Feuchtegehalt (Restfeuchte). So sollte die erfindungsgemäße Instant-Getränkezusammensetzung bzw. das Granulat, bezogen auf die Zusammensetzung und/oder das Granulat, eine Gesamtrestfeuchte von 0,5 bis 5 Gew.-%, insbesondere 1 bis 5 Gew.-%, vorzugsweise 2 bis 4 Gew.-%, aufweisen. Der maximale Gesamtrestfeuchtegehalt sollte in diesem Zusammenhang 5 Gew.-%, vorzugsweise 4 Gew.-%, bezogen auf die Zusammensetzung bzw. das Granulat, nicht überschreiten. Die Einstellung des Feuchtigkeitsgehaltes bzw. der Gesamtrestfeuchte in dem Granulat dient einerseits der Erhöhung der Stabilität, insbesondere der Lagerungs- und Alterungsbeständigkeit, und zum anderen der Verbesserung der Verklumpungseigenschaften. In diesem Zusammenhang bezieht sich der Begriff "Gesamtrestfeuchte", wie er im Rahmen der vorliegenden Erfindung verwendet wird, auf den Gesamtfeuchtegehalt der erfindungsgemäßen Zusammensetzung bzw. des Granulats und umfaßt somit sowohl zugegebene Feuchtigkeit, beispielsweise in Form von Wasser, als auch bereits in den Komponenten inhärent vorhandene Feuchtigkeit, wie beispielsweise Kristallwasser oder dergleichen.

Die erfindungsgemäße Instant-Getränkezusammensetzung sollte in einer Trinkflüssigkeit, insbesondere in Wasser, zumindest im wesentlichen, insbesondere vollständig, löslich sein, um auf einfache Weise ein Instant-Getränk herzustellen, daß auch bei längeren Standzeiten zumindest im wesentlichen nicht zur Bildung eines Bodensatzes neigt.

Zudem ist es im Rahmen der vorliegenden Erfindung von Vorteil, wenn die erfindungsgemäße Instant-Getränkezusammensetzung zumindest im wesentlichen, vorzugsweise vollständig, aus dem Granulat besteht. In diesem Zusammenhang kann das Granulat kornförmige bzw. stäbchenförmige Teilchen sowie deren Mischungen aufweisen. Insgesamt sollte der Staubanteil bzw. der Anteil sehr kleiner Partikel mit deutlich unterhalb der zuvor für die Granulate angegebenen Größe möglichst gering sein, um das Staub- und Verklumpungsverhalten der erfindungsgemäßen Zusammensetzung weiter zu verbessern.

Die erfindungsgemäße Instant-Getränkezusammensetzung zeichnet sich insgesamt durch eine signifikante Kalorienreduktion aus, was insbesondere durch den Einsatz spezieller Granulatbildner, insbesondere auf Basis von Zuckeralkoholen, Süßstoffen und Stärkederivaten bzw. deren Mischungen erreicht wird. Aufgrund des gegenüber den im Stand der Technik bekannten Instant-Getränkezusammensetzungen deutlich verminderten Kaloriengehaltes ist die erfindungsgemäße Instant-Getränkezusammensetzung ernährungsphysiologisch verbessert, wobei gleichzeitig die kariogene Wirkung vermindert ist.

Aufgrund der Verwendung bestimmter Süßstoffe kann zudem die Menge an erfindungsgemäßer Instant-Getränkezusammensetzung in einer Trinkflüssigkeit zur Herstellung eines Instant-Getränks gegenüber dem Stand der Technik verringert werden, so daß die erfindungsgemäße Zusammensetzung besonders sparsam bzw. in kleinen Mengen zu einer Trinkflüssigkeit zugegeben werden kann. So kann es beispielsweise vorgesehen sein, daß zur Herstellung eines trinkfertigen Instant-Getränks etwa 2 bis 9 g, insbesondere 3 bis 8 g, vorzugsweise 4 bis 6 g der erfindungsgemäßen Instant-Getränkezusammensetzung mit 100 ml einer Flüssigkeit vermischt bzw. darin gelöst werden, um ein schmackhaftes und kalorienreduziertes Instant-Getränk zu erhalten.

Wie zuvor angeführt, weist die erfindungsgemäße Instant-Getränkezusammensetzung aufgrund ihres Vorliegens in Form von speziellen Granulaten eine verbesserte Löslichkeit in der Trinkflüssigkeit auf. Aufgrund der definierten Größe der Granulate ist die Neigung zur Klumpenbildung sowohl bei Lagerung als auch bei Aufbereitung des Instant-Getränks deutlich reduziert. Auch optisch wird ein ansprechendes Aussehen der erfindungsgemäßen Instant-Getränkezusammensetzung erzielt. Bei der Handhabung, insbesondere sowohl bei der Verpackung als auch bei der Verwendung durch den Verbraucher, neigt die erfindungsgemäße Instant-Getränkezusammensetzung nicht zur Staubbildung.

Weiterer Gegenstand der vorliegenden Erfindung - gemäß einem **zweiten** Aspekt der vorliegenden Erfindung - ist ein Verfahren zur Herstellung einer zuvor beschriebenen Instant-Getränkezusammensetzung nach der vorliegenden Erfindung, welche sich insbesondere zur Herstellung eines vorzugsweise kalorienreduzierten Instant-Getränks durch Aufbereiten mit einer trinkbaren Flüssigkeit eignet und in Form eines Granulats vorliegt, wobei die Zusammensetzung (a) mindestens einen Granulatbildner in einer Menge von 10 bis 98 Gew.-%, bezogen auf die Zusammensetzung, und (b) mindestens einen Geschmacksbildner in einer Menge von 0,1 bis 75 Gew.-%, bezogen auf die Zusammensetzung, sowie (c) mindestens einen weiteren Inhaltsstoff, ausgewählt aus Säuerungsmitteln, Vitaminen und Farbstoffen, aufweist,
wobei das Verfahren die folgenden Verfahrensschritte umfaßt:
a) Herstellung einer Mischung, welche mindestens einen Granulatbildner und mindestens einen Geschmacksbildner sowie mindestens einen weiteren Inhaltsstoff, ausgewählt aus Säuerungsmitteln, Vitaminen und Farbstoffen, enthält;
b) nachfolgend Herstellung eines Granulats aus der in Schritt a) hergestellten Mischung;
c) schließlich Trocknung des in Schritt b) hergestellten Granulats, wobei das Granulat auf eine Gesamtrestfeuchte von 0,5 bis 5 Gew.-%, bezogen auf das Granulat, eingestellt wird;
wobei eine Instant-Getränkezusammensetzung erhalten wird, welche einen gegenüber handelsüblichen nichtkalorienreduzierten Produkten reduzierten Saccharosegehalt aufweist, wobei die Menge an Saccharose 25 bis 80 Gew.-%, bezogen auf die Zusammensetzung, beträgt, und welche Granulate mit einer Schüttdichte von 200 bis 600 g/l aufweist.

In diesem Zusammenhang kann es vorgesehen sein, daß in Schritt a) die Mischung durch Zugabe, insbesondere Einmischen, von Wasser angefeuchtet wird.

Das Anfeuchten ist aber nicht auf die Zugabe von Wasser beschränkt: In diesem Zusammenhang kann es gleichermaßen vorgesehen sein, daß in Schritt a) die Mischung durch Zugabe, insbesondere Einmischen, von flüssigen Extrakten, insbesondere Pflanzenextrakten, Fruchtextrakten, Tee-Extrakten oder deren Mischungen, angefeuchtet wird. Im Rahmen des erfindungsgemäßen Verfahrens ist es zudem möglich, daß in Schritt a) die Mischung durch Zugabe, insbesondere Einmischen, von Pflanzensäften, Fruchtsäften oder deren Mischungen, angefeuchtet wird. Auf diese Weise wird neben dem Anfeuchten gleichermaßen eine Aromatisierung der erfindungsgemäßen Instant-Getränkezusammensetzung erreicht.

Durch das Anfeuchten in Schritt a) sollte die Mischung auf einen Gesamtfeuchtegehalt von 0,5 bis 15 Gew.-%, insbesondere 0,5 bis 10 Gew.-%, vorzugsweise 2 bis 5 Gew.-%, bezogen auf die Mischung, eingestellt werden, was - wie zuvor beschrieben - durch die Zugabe von Wasser, flüssigen Extrakten bzw. Säften erreicht werden kann. Auf diese Weise wird gewissermaßen die Konsistenz der der erfindungsgemäßen Instant-Getränkezusammensetzung zugrundeliegenden Mischung vorgegeben, so daß auf diese Weise die nachfolgende Granulierung sozusagen optimiert wird.

Der Gesamtfeuchtegehalt in bezug auf die der erfindungsgemäßen Instant-Getränkezusammensetzung zugrundeliegenden Mischung bezieht sich gleichermaßen auf den Gesamtgehalt an Feuchtigkeit und umfaßt somit zugegebene Flüssigkeiten und inhärent vorhandenes Kristallwasser.

Die in Schritt b) vorgesehene Herstellung des Granulats kann in üblichen Granulatoren bzw. Granuliervorrichtungen durchgeführt werden.

Im Rahmen der vorliegenden Erfindung ist es in diesem Zusammenhang möglich, daß in Schritt b) die Herstellung des Granulats durch Hindurchleiten bzw. Hindurchdrücken bzw. Hindurchpressen der in Schritt a) hergestellten Mischung durch mindestens ein Sieb erfolgt. Auf diese Weise können gewissermaßen würstchenähnliche Granulate erhalten werden, wobei der Durchmesser der erhaltenen Granulate insbesondere durch die Maschenweite der Siebe bzw. des Siebes bestimmt wird und die Länge der erhaltenen Granulate, welche dann insbesondere in Stäbchenform vorliegen, beispielsweise auch durch den Gesamtfeuchtegehalt der zu granulierenden Mischung bestimmt wird, da hierdurch gewissermaßen das Abreißen bzw. Abbrechen der durch das Sieb bzw. die Siebe geführten bzw. gepreßten Mischung beeinflußt wird.

Was die Herstellung der Mischung in Schritt a) bzw. die Granulierung in Schritt b) des erfindungsgemäßen Verfahrens anbelangt, so sollte diesbezüglich insbesondere bei Raumtemperatur, insbesondere bei etwa 20° C, und/oder bei Umgebungsdruck, insbesondere bei einem Druck von etwa 1.013 hPa, verfahren werden.

In Schritt c) des erfindungsgemäßen Verfahrens erfolgt die Trocknung des Granulats. In diesem Zusammenhang wird in Schritt c) das Granulat auf eine Gesamtrestfeuchte von 0,5 bis 5 Gew.-%, insbesondere 1 bis 5 Gew.-%, vorzugsweise 2 bis 4 Gew.-%, bezogen auf das Granulat, eingestellt. Auch hier bezieht sich die Restfeuchte auf die Gesamtmenge an zugegebener Feuchtigkeit und inhärenter Feuchtigkeit, wie Kristallwasser.

In diesem Zusammenhang kann in Schritt c) die Trocknung des Granulats kontinuierlich, insbesondere in einem Wirbelstromtrockner, erfolgen.

Gleichermaßen ist es aber auch möglich, daß in Schritt c) die Trocknung des Granulats diskontinuierlich bzw. batchweise, insbesondere in einem Wirbelschichttrockner, erfolgt. Gleichermaßen ist auch eine Trocknung durch Mikrowellenbestrahlung oder unter Verwendung eines Bandtrockners möglich.

Was die in Schritt c) des erfindungsgemäßen Verfahrens vorgesehene Trocknung des erhaltenen Granulats anbelangt, so kann auch diese bei Raumtemperatur (etwa 20° C) und einem Druck von etwa 1013 hPa erfolgen. Gleichermaßen ist es jedoch auch möglich, daß in Schritt c) die Trocknung des Granulats bei einer Temperatur von 30 bis 130° C, insbesondere 40 bis 100° C, vorzugsweise 70 bis 80° C, durchgeführt wird. Weiterhin kann es im Rahmen des erfindungsgemäßen Verfahrens vorgesehen sein, daß in Schritt c) die Trocknung des Granulats unter vermindertem Druck, insbesondere unter Vakuum, durchgeführt wird.

Nach in Schritt c) erfolgter Trocknung kann das getrocknete Granulat insbesondere in einer Abkühlvorrichtung und/oder Abkühlzone abgekühlt werden, vorzugsweise auf eine Temperatur von 10 bis 20° C.

Insgesamt wird - mit anderen Worten - die erfindungsgemäße Instant-Getränkezusammensetzung insbesondere mit Hilfe eines Granulationsvorganges mit anschließender Trocknung hergestellt, wobei zunächst eine Grundmasse, insbesondere wie in Verfahrensschritt a) hergestellt, mit Wasser befeuchtet wird, und zwar so lange, bis eine granulierfähige Masse entsteht, die durch entsprechende Siebe gedrückt wird, welche spezielle "Würstchengranulate" entstehen lassen. Die anschließende Trocknung kann in verschiedenen kontinuierlichen Wirbelstromtrocknern erfolgen oder batchweise in Wirbelstromtrocknem, wie zuvor beschrieben.

Schließlich kann es im Rahmen des erfindungsgemäßen Verfahrens vorgesehen sein, daß sich der Trocknung in Schritt c) ein Verfahrensschritt des Klassierens anschließt, insbesondere mittels Siebens, wobei bei dem Verfahrensschritt des Klassierens Granulate mit Teilchengrößen ober- oder unterhalb der gewünschten Teilchengrößen abgetrennt werden können.

Schließlich ist weiterer Gegenstand der vorliegenden Erfindung - gemäß einem **dritten** Aspekt der vorliegenden Erfindung - die Verwendung der zuvor beschriebenen Instant-Getränkezusammensetzung nach der vorliegenden Erfindung zur Herstellung eines vorzugsweise kalorienreduzierten Instant-Getränks, insbesondere Instant-Teegetränks. Zu Zwecken der Herstellung des fertigen Instant-Getränks wird die erfindungsgemäße Instant-Getränkezusammensetzung mit einer trinkbaren Flüssigkeit, insbesondere Wasser, aufbereitet, wobei vorzugsweise 2 bis 9 g, bevorzugt 3 bis 8 g, besonders bevorzugt 4 bis 6 g, der Zusammensetzung auf 100 ml Trinkflüssigkeit, insbesondere Wasser, verwendet werden. Aufgrund der besonderen Ausgestaltung der erfindungsgemäßen Instant-Getränkezusammensetzung, wie zuvor beschrieben, weist das damit hergestellte Instant-Getränk einen verringerten Kaloriengehalt und somit verbesserte ernährungsphysiologische Eigenschaften bei gleichzeitig verminderter kariogener Wirkung auf.

Im Rahmen der vorliegenden Erfindung ist es insgesamt gelungen, durch eine spezielle Rezeptierung und Herstellung eine kalorienreduzierte Instant-Getränkezusammensetzung nach der vorliegenden Erfindung bzw. ein kalorienreduziertes Granulat zum anschließenden Zubereiten eines Instant-Getränks bereitzustellen. Die mit der erfindungsgemäßen Instant-Getränkezusammensetzung hergestellten Getränke können Tee oder teeähnlich sein, wie z. B. Zitronentee, Pfirsichtee oder Apfeltee sowie Wildfruchttee. Zudem kann die erfindungsgemäße Instant-Getränkezusammensetzung auch derart ausgestaltet sein, daß damit sozusagen herkömmliche Instant-Getränke, wie Orangengetränk, Zitronengetränk, Grapefruitgetränk und dergleichen hergestellt werden können.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der vorliegenden Ausführungsbeispiele veranschaulicht, welche die vorliegende Erfindung jedoch nicht beschränken.

### Ausführungsbeispiele:

### Beispiel 1: Rezepturbeispiel für eine erfindungsgemäße Instant-Getränkezusammensetzung zur Herstellung eines kalorienreduzierten Zitronentees

Es wurde eine Ausgangsmischung auf Basis der folgenden Bestandteile bzw. Inhaltsstoffe hergestellt:

| | |
|---|---|
| Zucker (Saccharose) | 51,26 Gew.-% |
| Dextrose | 40,00 Gew.-% |
| Citronensäure | 5,00 Gew.-% |
| Schwarztee-Extrakt | 2,56 Gew.-% |
| Vitamin C | 0,50 Gew.-% |
| Aroma | 0,28 Gew.-% |
| Aspartam | 0,15 Gew.-% |
| Acesulfam K | 0,15 Gew.-% |
| Zitronenfruchtpulver | 0,15 Gew.-% |

Die zuvor beschriebene Mischung wurde zu einem stäbchenförmigen Granulat verarbeitet, wobei die einzelnen Teilchen einen Durchmesser von etwa 1,5 mm und eine Länge von etwa 2,5 mm aufweisen. Anschließend wurde das so erhaltene Granulat auf einen Gesamtrestfeuchtegehalt von etwa 3 Gew.-%, bezogen auf das Granulat, eingestellt. Es resultiert eine Instant-Getränkezusammensetzung, welche sich zur Aufbereitung bzw. Zubereitung eines Teegetränks eignet. Hierzu werden etwa 5 g der erfindungsgemäßen Instant-Getränkezusammensetzung mit 100 ml Wasser aufgegossen, so daß ein erfrischendes und kalorienreduziertes Teegetränk resultiert. Dabei weist das kalorienreduzierte Teegetränk im Vergleich zu mit herkömmlichen Instant-Getränkezusammensetzungen zubereiteten Teegetränken einen um etwa 50 % reduzierten Kaloriengehalt auf. Im Vergleich zu herkömmlichen Instant-Getränkezusammensetzungen ist zudem die zu der Flüssigkeit zugegebene Menge deutlich reduziert: Herkömmliche Getränke werden mit 10 g eines herkömmlichen Instant-Getränkepulvers pro 100 ml Wasser zubereitet.

Es versteht sich von selbst, daß nicht nur Teegetränke auf Basis von Schwarztee-Extrakten hergestellt werden können, sondern auch solche auf Basis von weiteren Fruchtextrakten und dergleichen, z. B. Hibiskus-Extrakten, Grüntee-Extrakten, Rotbusch-Extrakten (Rooibos-Extrakten) usw.

### Beispiel 2: Rezepturbeispiel für eine erfindungsgemäße Instant-Getränkezusammensetzung zur Herstellung eines kalorienreduzierten Wildfruchtteegetränks

In entsprechender Weise wie in Ausführungsbeispiel 1 wird eine Instant-Getränkezusammensetzung für ein Teegetränk auf Basis der folgenden Ausgangsmischung hergestellt:

| | |
|---|---|
| Zucker (Saccharose) | 68,85 Gew.-% |
| Dextrose | 20,00 Gew.-% |
| Citronensäure | 5,60 Gew.-% |
| Hibiskus-Exträkt | 3,00 Gew.-% |
| Aroma | 1,25 Gew.-% |
| Vitamin C | 0,50 Gew.-% |
| Rote Bete Saftpulver | 0,50 Gew.-% |
| Aspartam | 0,15 Gew.-% |
| Acesulfam K | 0,15 Gew.-% |
| Hagebuttenextrakt | 0,15 Gew.-% |

Auf Basis dieser Ausgangsmischung wird wie zuvor beschrieben ein Granulat hergestellt. Etwa 5 g der erfindungsgemäßen Zusammensetzung bzw. des Granulats auf 100 ml Wasser liefern ein erfrischendes Wildfruchtteegetränk, welches gegenüber herkömmlichen Wildfruchtteegetränken einen um etwa 50 % verminderten Kaloriengehalt aufweist.

## Patentansprüche

1. Instant-Getränkezusammensetzung, insbesondere zur Herstellung eines vorzugsweise kalorienreduzierten Instant-Getränks durch Aufbereiten mit einer trinkbaren Flüssigkeit, in Form eines Granulats, wobei die Zusammensetzung aufweist:
(a) mindestens einen Granulatbildner in einer Menge von 10 bis 98 Gew.-%, bezogen auf die Zusammensetzung, und
(b) mindestens einen Geschmacksbildner in einer Menge von 0,1 bis 75 Gew.-%, bezogen auf die Zusammensetzung, sowie
(c) mindestens einen weiteren Inhaltsstoff, ausgewählt aus Säuerungsmitteln, Vitaminen und Farbstoffen;
- wobei die Zusammensetzung einen gegenüber handelsüblichen nichtkalorienreduzierten Produkten reduzierten Saccharosegehalt aufweist, wobei die Menge an Saccharose 25 bis 80 Gew.-%, bezogen auf die Zusammensetzung, beträgt,
- wobei die Zusammensetzung Granulate mit einer Schüttdichte von 200 bis 600 g/l aufweist, und
- wobei die Zusammensetzung, bezogen auf die Zusammensetzung, eine Gesamtrestfeuchte von 0,5 bis 5 Gew.-% aufweist.

2. Zusammensetzung nach Anspruch 1, wobei der Granulatbildner ausgewählt ist aus der Gruppe von Zuckeralkoholen, Süßstoffen, Stärkederivaten, Zuckern und deren Mischungen, insbesondere wobei der Zuckeralkohol ausgewählt ist aus der Gruppe von Erythrit, Mannit, Xylit, Sorbit, Isomaltit, Maltit, Lactit, Galactit und deren Mischungen, und/oder wobei der Süßstoff ausgewählt ist aus der Gruppe von Acesulfam, Cyclamat, Glycyrrhizin, Aspartam, Dulcin, Saccharin, Rebaudiosid, Steviosid, Naringin-Dihydrochalkon, Monellin, Neohesperidin-Dihydrochalkon (NHDC), Sucralose, Thaumatin, Neotam und deren Mischungen, insbesondere Aspartam und/oder Acesulfam.

3. Zusammensetzung nach Anspruch 2, wobei die Menge an Süßstoff 0,01 bis 5 Gew.-%, insbesondere 0,1 bis 4 Gew.-%, vorzugsweise 0,2 bis 3 Gew.-%, bezogen auf die Zusammensetzung und/oder das Granulat, beträgt und/oder wobei die Menge an Süßstoff höchstens 5 Gew.-%, insbesondere höchstens 3 Gew.-%, vorzugsweise höchstens 2 Gew.-%, besonders bevorzugt höchstens 1 Gew.-%, bezogen auf die Zusammensetzung und/oder das Granulat, beträgt.

4. Zusammensetzung nach Anspruch 2 oder 3, wobei das Stärkederivat ausgewählt ist aus Stärkeabbauprodukten, insbesondere Dextrinen und Maltodextrinen, vorzugsweise Maltodextrinen und/oder wobei der Zucker ausgewählt ist aus der Gruppe von Saccharose, Mannose, Maltose, Dextrose, Lactose, Glucose, Xylose, Isomaltulose und deren Mischungen.

5. Zusammensetzung nach einem der vorangehenden Ansprüche, wobei die Menge an Zucker(n), insbesondere Saccharose, höchstens 80 Gew.-%, insbesondere höchstens 75 Gew.-%, vorzugsweise höchstens 70 Gew.-%, bezogen auf die Zusammensetzung und/oder das Granulat, beträgt.

6. Zusammensetzung nach einem der vorangehenden Ansprüche, wobei die Menge an Geschmacksbildner 0,5 bis 60 Gew.-%, vorzugsweise 1 bis 50 Gew.-%, bevorzugt 2 bis 25 Gew.-%, bezogen auf die Zusammensetzung und/oder das Granulat, beträgt.

7. Zusammensetzung nach einem der vorangehenden Ansprüche, wobei der Geschmacksbildner ausgewählt ist aus Extrakten, insbesondere Pflanzenextrakten, Fruchtextrakten, Tee-Extrakten oder deren Mischungen, vorzugsweise in Mengen von 0,1 bis 10 Gew.-%, bevorzugt 0,25 bis 8 Gew.-%, besonders bevorzugt 0,5 bis 6 Gew.-%, ganz besonders bevorzugt 1 bis 5 Gew.-%, bezogen auf die Zusammensetzung und/oder das Granulat, und/oder wobei der Geschmacksbildner ausgewählt ist aus Aromen und/oder Aromastoffen, vorzugsweise in Mengen von 0,01 bis 10 Gew.-%, bevorzugt 0,1 bis 8 Gew.-%, besonders bevorzugt 0,3 bis 5 Gew.-%, ganz besonders bevorzugt 0,5 bis 3 Gew.-%, bezogen auf die Zusammensetzung und/oder das Granulat, und/oder wobei der Geschmacksbildner ausgewählt ist aus Pflanzenpulvern, Fruchtpulvern und/oder Saftpulvern, vorzugsweise in Mengen von 0,01 bis 8 Gew.-%, bevorzugt 0,05 bis 6 Gew.-%, besonders bevorzugt 0,1 bis 4 Gew.-%, ganz besonders bevorzugt 0,15 bis 3 Gew.-%, bezogen auf die Zusammensetzung und/oder das Granulat.

8. Zusammensetzung nach einem der vorangehenden Ansprüche, wobei die Zusammensetzung Säuerungsmittel, insbesondere aus der Gruppe von Genußsäuren, vorzugsweise Citronensäure, Weinsäure und Äpfelsäure, enthält, vorzugsweise in Mengen von 0,1 bis 10 Gew.-%, bevorzugt 1 bis 10 Gew.-%, ganz besonders bevorzugt 2 bis 8 Gew.-%, bezogen auf die Zusammensetzung und/oder das Granulat.

9. Zusammensetzung nach einem der vorangehenden Ansprüche, wobei die Zusammensetzung Vitamine, insbesondere Ascorbinsäure (Vitamin C), enthält, vorzugsweise in Mengen von 0,01 bis 5 Gew.-%, bevorzugt 0,1 bis 4 Gew.-%, ganz besonders bevorzugt 0,5 bis 2 Gew.-%, bezogen auf die Zusammensetzung und/oder das Granulat.

10. Zusammensetzung nach einem der vorangehenden Ansprüche, wobei die Zusammensetzung Farbstoffe, insbesondere natürliche und/oder naturidentische Farbstoffe, enthält, vorzugsweise in Mengen von 0,01 bis 5 Gew.-%, bevorzugt 0,1 bis 4 Gew.-%, ganz besonders bevorzugt 0,5 bis 3 Gew.-%, bezogen auf die Zusammensetzung und/oder das Granulat.

11. Zusammensetzung nach einem der vorangehenden Ansprüche, wobei die Zusammensetzung in Form eines kornförmigen Granulats vorliegt, insbesondere wobei das Granulat eine Partikelgröße von 0,1 bis 6 mm, insbesondere 0,2 bis 5 mm, vorzugsweise 0,5 bis 3,5 mm, aufweist.

12. Zusammensetzung nach einem der vorangehenden Ansprüche, wobei die Zusammensetzung in Form eines zumindest im wesentlichen stäbchenförmigen Granulats vorliegt, insbesondere wobei das Granulat einen Partikeldurchmesser von 0,1 bis 6 mm, insbesondere 0,2 bis 5 mm, vorzugsweise 0,5 bis 3,5 mm, aufweist und/oder insbesondere wobei das Granulat eine Partikellänge von 0,2 bis 10 mm, insbesondere 0,4 bis 6 mm, vorzugsweise 0,5 bis 4 mm, aufweist.

13. Verfahren zur Herstellung einer Instant-Getränkezusammensetzung, insbesondere zur Herstellung eines vorzugsweise kalorienreduzierten Instant-Getränks durch Aufbereiten mit einer trinkbaren Flüssigkeit, in Form eines Granulats, wie in einem der vorangehenden Ansprüche definiert, wobei die Zusammensetzung (a) mindestens einen Granulatbildner in einer Menge von 10 bis 98 Gew.-%, bezogen auf die Zusammensetzung, und (b) mindestens einen Geschmacksbildner in einer Menge von 0,1 bis 75 Gew.-%, bezogen auf die Zusammensetzung, sowie (c) mindestens einen weiteren Inhaltsstoff, ausgewählt aus Säuerungsmitteln, Vitaminen und Farbstoffen, aufweist,
wobei das Verfahren die folgenden Verfahrensschritte umfaßt:
a) Herstellung einer Mischung, welche mindestens einen Granulatbildner und mindestens einen Geschmacksbildner sowie mindestens einen weiteren Inhaltsstoff, ausgewählt aus Säuerungsmitteln, Vitaminen und Farbstoffen, enthält;
b) nachfolgend Herstellung eines Granulats aus der in Schritt a) hergestellten Mischung;
c) schließlich Trocknung des in Schritt b) hergestellten Granulats, wobei das Granulat auf eine Gesamtrestfeuchte von 0,5 bis 5 Gew.-%, bezogen auf das Granulat, eingestellt wird;
wobei eine Instant-Getränkezusammensetzung erhalten wird, welche einen gegenüber handelsüblichen nichtkalorienreduzierten Produkten reduzierten Saccharosegehalt aufweist, wobei die Menge an Saccharose 25 bis 80 Gew.-%, bezogen auf die Zusammensetzung, beträgt, und welche Granulate mit einer Schüttdichte von 200 bis 600 g/l aufweist.

14. Instant-Getränkezusammensetzung, insbesondere nach einem der Ansprüche 1 bis 12, insbesondere zur Herstellung eines vorzugsweise kalorienreduzierten Instant-Getränks durch Aufbereiten mit einer trinkbaren Flüssigkeit, erhältlich nach dem Verfahren nach Anspruch 13.

15. Verwendung einer Instant-Getränkezusammensetzung nach einem der Ansprüche 1 bis 12 zur Herstellung eines vorzugsweise kalorienreduzierten Instant-Getränks, insbesondere Instant-Teegetränks.

## Claims

1. An instant beverage composition, in particular for the production of a preferably calorie-reduced instant beverage by means of processing the same with a drinkable liquid in the form of a granulate, the composition comprising the following:
(a) at least one granulate creator at an amount of 10 to 98 % by weight, based on the composition, and
(b) at least one taste creator at an amount of 0.1 to 75 % by weight, based on the composition, as well as
(c) at least one additional ingredient, selected from acidifiers, vitamins, and colorants;
- wherein the composition comprises a sucrose content that is reduced as opposed to commercially available non-calorie-reduced products, wherein the amount of sucrose is 25 to 80 % by weight, based on the composition,
- wherein the composition comprises granulates having a bulk density of 200 to 600 g/l, and
- wherein the composition, based on the composition, comprises a total residual moisture of 0.5 to 5 % by weight.

2. The composition according to claim 1, wherein the granulate creator is selected from the group of sugar alcohol, sweeteners, starch derivatives, sugars and the mixtures thereof, in particular, wherein the sugar alcohol is selected from the group of erythritol, mannitol, xylitol, sorbitol, isomaltose, maltitol, lactide, galactide, and the mixtures thereof, and/or wherein the sweetener is selected from the group of acesulfame, cyclamate, glycyrrhizin, aspartame, dulcin, saccharin, rebaudioside, stevioside, naringin dihydrochalcone, monellin, neohesperidin dihydrochalcone (NHDC), sucralose, thaumatin, neotame, and the mixtures thereof, in particular aspartame and/or acesulfame.

3. The composition according to claim 2, wherein the amount of sweetener is 0.01 to 5 % by weight, in particular 0.1 to 4 % by weight, preferably 0.2 to 3 % by weight, based on the composition and/or on the granulate, and/or wherein the amount of sweetener is not more than 5 % by weight, in particular not more than 3 % by weight, preferably not more than 2 % by weight, mostly preferred not more than 1 % by weight, based on the composition and/or on the granulate.

4. The composition according to claims 2 or 3, wherein the starch derivative is selected from starch decomposition products, in particular dextrins and maltodextrins, preferably maltodextrins, and/or wherein the sugar is selected from the group of sucrose, mannose, maltose, dextrose, lactose, glucose, xylose, isomaltulose, and the mixtures thereof.

5. The composition according to one of the previous claims, wherein the amount of sugar(s), in particular sucrose, is not more than 80 % by weight, in particular not more than 75 % by weight, preferably not more than 70 % by weight, based on the composition and/or on the granulate.

6. The composition according to one of the previous claims, wherein the amount of taste creators is 0.5 to 60 % by weight, preferably 1 to 50 % by weight, preferably 2 to 25 % by weight, based on the composition and/or on the granulate.

7. The composition according to one of the previous claims, wherein the taste creator is selected from extracts, in particular plant extracts, fruit extracts, tea extracts, or the mixtures thereof, preferably in amounts of 0.1 to 10 % by weight, preferably 0.25 to 8 % by weight, particularly preferred 0.5 to 6 % by weight, most preferred 1 to 5 % by weight, based on the composition and/or on the granulate, and/or wherein the taste creator is selected from aromas and/or flavorings, preferably in amounts of 0.01 to 10 % by weight, preferably 0.1 to 8 % by weight, particularly preferred 0.3 to 5 % by weight, most preferred 0.5 to 3 % by weight, based on the composition and/or on the granulate, and/or wherein the taste creator is selected from plant powders, fruit powders, and/or juice powders, preferably in amounts of 0.01 to 8 % by weight, preferably 0.05 to 6 % by weight, particularly preferred 0.1 to 4 % by weight, most preferred 0.15 to 3 % by weight, based on the composition and/or on the granulate.

8. The composition according to one of the previous claims, wherein the composition comprises acidifiers, in particular from the group of culinary acids, preferably citric acid, tartaric acid, and malic acid, preferably in amounts of 0.1 to 10 % by weight, preferably 1 to 10 % by weight, most preferred 2 to 8 % by weight, based on the composition and/or on the granulate.

9. The composition according to one of the previous claims, wherein the composition comprises vitamins, in particular ascorbic acid (vitamin C), preferably in amounts of 0.1 to 5 % by weight, preferably 0.1 to 4 % by weight, most preferred 0.5 to 2 % by weight, based on the composition and/or on the granulate.

10. The composition according to one of the previous claims, wherein the composition comprises colorants, in particular natural and/or nature-identical colorants, preferably in amounts of 0.01 to 5 % by weight, preferably 0.1 to 4 % by weight, most preferred 0.5 to 3 % by weight, based on the composition and/or on the granulate.

11. The composition according to one of the previous claims, wherein the composition is present in the form of a grain-shaped granulate, in particular wherein the granulate has a particle size of 0.1 to 6 mm, in particular 0.2 to 5 mm, preferably 0.5 to 3.5 mm.

12. The composition according to one of the previous claims, wherein the composition is present in the form of at least one essentially stick-like granulate, in particular wherein the granulate has a particle diameter of 0.1 to 6 mm, in particular 0.2 to 5 mm, preferably 0.5 to 3.5 mm, and/or in particular wherein the granulate has a particle length of 0.2 to 10 mm, in particular 0.4 to 6 mm, preferably 0.5 to 4 mm.

13. A method for the production of an instant beverage composition, in particular for the production of a preferably calorie-reduced instant beverage by means of processing the same with a drinkable liquid, in the form of a granulate, such as defined in one of the previous claims, wherein the composition comprises (a) at least one granulate creator at an amount of 10 to 98 % by weight, based on the composition, and (b) at least one taste creator at an amount of 0.1 to 75 % by weight, based on the composition, as well as (c) at least one additional ingredient, selected from acidifiers, vitamins, and colorants,
wherein the method comprises the following process steps:
a) the production of a mixture comprising at least one granulate creator and at least one taste creator, as well as at least one additional ingredient, selected from acidifiers, vitamins, and colorants;
b) the subsequent production of a granulate from the mixture produced in step a);
c) finally, the drying of the granulate produced in step b), wherein the granulate is adjusted to a total residual moisture of 0.5 to 5 % by weight, based on the granulate;
wherein an instant beverage composition is obtained, comprising a sucrose content that is reduced as opposed to commercially available non-calorie-reduced products, wherein the amount of sucrose is 25 to 80 % by weight, based on the composition, and comprising granulates having a bulk density of 200 to 600 g/l.

14. The instant beverage composition, in particular according to one of the claims 1 to 12, in particular for the production of a preferably calorie-reduced instant beverage by means of processing the same with a drinkable liquid, obtained according to the method according to claim 13.

15. A use of an instant beverage composition according to one of the claims 1 to 12 for the production of a preferably calorie-reduced instant beverage, in particular an instant tea beverage.

## Revendications

1. Composition pour boisson instantanée, en particulier pour fabriquer une boisson instantanée de préférence hypocalorique, par préparation à l'aide d'un liquide potable, sous forme d'un granulé, la composition comprenant:
(a) au moins un agent générateur de granulés, en une quantité de 10 à 98 % en poids par rapport à la composition, et
(b) au moins un agent de sapidité, en une quantité de 0,1 à 75 % en poids par rapport à la composition, ainsi que
(c) au moins un autre constituant, choisi parmi les acidulants, les vitamines et les colorants;
- la composition présentant une teneur en saccharose réduite par rapport à celle des produits non hypocaloriques du commerce, la quantité de saccharose étant de 25 à 80 % en poids par rapport à la composition;
- la composition comportant des granulés ayant une masse volumique apparente de 200 à 600 g/l; et
- la composition présentant, par rapport à la composition, une teneur en humidité résiduelle de 0,5 à 5 % en poids.

2. Composition selon la revendication 1, dans laquelle le générateur de granulés est choisi dans le groupe consistant en les alcools de sucre, les édulcorants, les dérivés de l'amidon, les sucres et leurs mélanges, l'alcool de sucre étant en particulier choisi dans le groupe consistant en l'érythritol, le mannitol, le xylitol, le sorbitol, l'isomaltitol, le maltitol, le lactitol, le galactitol et les mélanges de ceux-ci, et/ou l'édulcorant étant choisi dans le groupe consistant en l'acésulfame, le cyclamate, la glycyrrhizine, l'aspartame, la dulcine, la saccharine, le rebaudioside, le stévioside, la naringine-dihydrochalcone, la monelline, la néohespéridine-dihydrochalcone (NHDC), le sucralose, la thaumatine, le néotame et les mélanges de ceux-ci, en particulier l'aspartame et/ou l'acésulfame.

3. Composition selon la revendication 2, dans laquelle la quantité de l'édulcorant est de 0,01 à 5 % en poids, en particulier de 0,1 à 4 % en poids, de préférence de 0,2 à 3 % en poids par rapport à la composition et/ou au granulé, et/ou la quantité de l'édulcorant est d'au plus 5 % en poids, en particulier d'au plus 3 % en poids, de préférence d'au plus 2 % en poids, d'une manière particulièrement préférée d'au plus 1 % en poids par rapport à la composition et/ou au granulé.

4. Composition selon la revendication 2 ou 3, dans laquelle le dérivé de l'amidon est choisi parmi les produits de dégradation de l'amidon, en particulier les dextrines et les maltodextrines, de préférence les maltodextrines, et/ou le sucre est choisi dans le groupe consistant en le saccharose, le mannose, le maltose, le dextrose, le lactose, le glucose, le xylose, l'isomaltulose et les mélanges de ceux-ci.

5. Composition selon l'une des revendications précédentes, dans laquelle la quantité du ou des sucres, en particulier du saccharose, est d'au plus 80 % en poids, en particulier d'au plus 75 % en poids, de préférence d'au plus 70 % en poids, par rapport à la composition et/ou au granulé.

6. Composition selon l'une des revendications précédentes, dans laquelle la quantité de l'agent de sapidité est de 0,5 à 60 % en poids, de préférence de 1 à 50 % en poids, de préférence de 2 à 25 % en poids par rapport à la composition et/ou au granulé.

7. Composition selon l'une des revendications précédentes, dans laquelle l'agent de sapidité est choisi parmi les extraits, en particulier les extraits de plantes, les extraits de fruits, les extraits de thé ou les mélanges de ceux-ci, de préférence en des quantités de 0,1 à 10 % en poids, de préférence de 0,25 à 8 % en poids, d'une manière particulièrement préférée de 0,5 à 6 % en poids, d'une manière tout particulièrement préférée de 1 à 5 % en poids par rapport à la composition et/ou au granulé, et/ou l'agent de sapidité est choisi parmi les arômes et/ou les substances aromatiques, de préférence en des quantités de 0,01 à 10 % en poids, de préférence de 0,1 à 8 % en poids, d'une manière particulièrement préférée de 0,3 à 5 % en poids, d'une manière tout particulièrement préférée de 0,5 à 3 % en poids, par rapport à la composition et/ou au granulé, et/ou l'agent de sapidité est choisi parmi les poudres de plantes, les poudres de fruits et/ou les poudres de jus, de préférence en des quantités de 0,01 à 8 % en poids, de préférence de 0,05 à 6 % en poids, d'une manière particulièrement préférée de 0,1 à 4 % en poids, d'une manière tout particulièrement préférée de 0,15 à 3 % en poids par rapport à la composition et/ou au granulé.

8. Composition selon l'une des revendications précédentes, la composition contenant des acidulants, en particulier du groupe des acides alimentaires, de préférence l'acide citrique, l'acide tartrique et l'acide malique, de préférence en des quantités de 0,1 à 10 % en poids, de préférence de 1 à 10 % en poids, d'une manière tout particulièrement préférée de 2 à 8 % en poids par rapport à la composition et/ou au granulé.

9. Composition selon l'une des revendications précédentes, la composition contenant des vitamines, en particulier de l'acide ascorbique (vitamine C), de préférence en des quantités de 0,01 à 5 % en poids, de préférence de 0,1 à 4 % en poids, d'une manière tout particulièrement préférée de 0,5 à 2 % en poids par rapport à la composition et/ou au granulé.

10. Composition selon l'une des revendications précédentes, la composition contenant des colorants, en particulier des colorants naturels et/ou identiques à des colorants naturels, de préférence en des quantités de 0,01 à 5 % en poids, de préférence de 0,1 à 4 % en poids, d'une manière tout particulièrement préférée de 0,5 à 3 % en poids par rapport à la composition et/ou au granulé.

11. Composition selon l'une des revendications précédentes, la composition se présentant sous forme d'un granulé granulaire, le granulé ayant en particulier une granulométrie de 0,1 à 6 mm, de préférence de 0,2 à 5 mm, de préférence de 0,5 à 3,5 mm.

12. Composition selon l'une des revendications précédentes, la composition se présentant sous forme d'un granulé au moins pour l'essentiel en forme de bâtonnet, le granulé ayant en particulier un diamètre de particule de 0,1 à à 6 mm, en particulier de 0,2 à 5 mm, de préférence de 0,5 à 3,5 mm et/ou le granulé ayant en particulier une longueur de particule de 0,2 à 10 mm, en particulier de 0,4 à 6 mm, de préférence de 0,5 à 4 mm.

13. Procédé de fabrication d'une composition pour boisson instantanée, en particulier de fabrication d'une boisson instantanée de préférence hypocalorique, par préparation d'un liquide potable, sous forme d'un granulé, tel que défini dans l'une des revendications précédentes, la composition comportant (a) au moins un générateur de granulés en une quantité de 10 à 98 % en poids par rapport à la composition, et (b) au moins un agent de sapidité en une quantité de 0,1 à 75 % en poids par rapport à la composition, ainsi que (c) au moins un autre constituant choisi parmi les acidulants, les vitamines et les colorants, le procédé comprenant les étapes suivantes:
a) fabrication d'un mélange qui contient au moins un générateur de granulés et au moins un agent de sapidité, ainsi qu'au moins un autre constituant choisi parmi les acidulants, les vitamines et les colorants;
b) puis fabrication d'un granulé à partir du mélange fabriqué dans l'étape a);
c) finalement, séchage du granulé fabriqué dans l'étape b), le granulé étant ajusté à une humidité résiduelle totale de 0,5 à 5 % en poids par rapport au granulé;
ce grâce à quoi on obtient une composition pour boisson instantanée, qui présente une teneur en saccharose réduite par rapport à celle des produits non hypocaloriques du commerce, la quantité de saccharose étant de 25 à 80 % en poids par rapport à la composition, les granulés ayant une masse volumique apparente de 200 à 600 g/l.

14. Composition pour boisson instantanée, en particulier selon l'une des revendications 1 à 12, en particulier pour fabriquer une boisson instantanée de préférence hypocalorique, par préparation avec un liquide potable, pouvant être obtenue par le procédé selon la revendication 13.

15. Utilisation d'une composition pour boisson instantanée selon l'une des revendications 1 à 12 pour fabriquer une boisson instantanée de préférence hypocalorique, en particulier une boisson de thé instantané.
